# EUROPÄISCHE PATENTANMELDUNG

(11) **EP 3 786 730 A1**
(43) Veröffentlichungstag der Anmeldung: **03.03.2021**
(21) Anmeldenummer: 20190250.9
(22) Anmeldetag: 10.08.2020
(51) Int. Cl.: G05B 9/02, B61L 25/06, G09G 3/00

(54) **VERFAHREN ZUR ÜBERWACHUNG EINER SIGNALVERBINDUNG**

(30) Priorität: 30.08.2019 DE 102019213109
(71) Anmelder: Siemens Mobility GmbH, 81739 München (DE)
(72) Erfinder: Griebel, Stephan, 38302 Wolfenbüttel (DE)

(57) **Zusammenfassung**

Die Erfindung betrifft ein Verfahren zur Überwachung einer Signalverbindung (1), wobei
- die Anzeigevorrichtung (2) durch die Steuerkomponente (3) über die Signalverbindung ansteuert wird, und
mit den Schritten:
A) Erfassen einer ersten Information (I1), die repräsentativ für eine Bildaufnahme (BA) zumindest eines Istzustands der Anzeigevorrichtung (2) ist,
B) Erfassen einer zweiten Information (I2), die repräsentativ für Signale der Steuerkomponente (3) ist,
C) Bereitstellen der ersten Information (I1) und der zweiten Information (I2) für einen computerimplementierten Algorithmus (A),
D) Bestimmen einer ersten Vergleichsinformation (V1) durch den Algorithmus (A) in Abhängigkeit der ersten Information (I1),
E) Bestimmen einer zweiten Vergleichsinformation (V2) durch den Algorithmus (A) in Abhängigkeit der zweiten Information (I2),
E) Vergleich (V) der ersten Vergleichsinformation (V1) mit der zweiten Vergleichsinformation (V2), und, falls die erste Vergleichsinformation (V1) von der zweiten Vergleichsinformation (V2) abweicht,
F) Erzeugen eines Fehlersignals (FS).

## Beschreibung

Es wird ein Verfahren zur Überwachung einer Signalverbindung zwischen einer Anzeigevorrichtung und einer Steuerkomponente angegeben. Darüber hinaus werden ein Computerprogramm und eine Anordnung angegeben.

Eine Signalverbindung zwischen einer Anzeigevorrichtung und einer Steuerkomponente wird in der Regel nicht überwacht. Ein Funktionsfehler der Signalverbindung und/oder der Anzeigevorrichtung kann so in der Regel nicht direkt identifiziert werden.

Eine zu lösende Aufgabe besteht darin, ein Verfahren, ein Computerprogramm und eine Anordnung anzugeben, mit denen eine Signalverbindung zwischen einer Anzeigevorrichtung und einer Steuerkomponente besonders sicher überwacht werden kann.

Diese Aufgabe wird durch das Verfahren und die Gegenstände der Patentansprüche 1, 8 und 9 gelöst. Vorteilhafte Ausgestaltungen, Implementierungen und Weiterbildungen sind Gegenstand der abhängigen Patentansprüche. Der Offenbarungsgehalt der Patentansprüche ist hierbei ausdrücklich in die vorliegende Beschreibung aufgenommen.

Zunächst wird das Verfahren zur Überwachung einer Signalverbindung zwischen einer Anzeigevorrichtung und einer Steuerkomponente erläutert.

Gemäß zumindest einer Ausführungsform des Verfahrens wird die Anzeigevorrichtung durch die Steuerkomponente über die Signalverbindung ansteuert. Die Steuerkomponente umfasst bevorzugt einen Bildspeicher, einen Bedienrechner und einen Stellwerksrechner. Der Bildspeicher ist bevorzugt in den Bedienrechner integriert. In dieser Ausführungsform ist die Steuerkomponente, insbesondere der Bildspeicher, dazu ausgebildet, Anzeigekonfigurationen auf der Anzeigevorrichtung vorzugeben.

Gemäß zumindest einer Ausführungsform des Verfahrens wird zumindest ein Sollzustand der Anzeigevorrichtung durch Signale der Steuerkomponente vorgegeben. Insbesondere geben die Signale die Anzeigekonfigurationen, die auf der Anzeigevorrichtung dargestellt werden, eineindeutig vor. Beispielsweise leitet der Stellwerksrechner Zustandssignale an den Bildspeicher weiter. Die Zustandssignale repräsentieren beispielsweise einen Zustand eines Schienensystems. Diese Zustandssignale werden von dem Bildspeicher verarbeitet und mittels der Signalverbindung durch Signale an die Anzeigevorrichtung weitergeleitet. Auf der Anzeigevorrichtung wird dann zumindest eine Anzeigekonfiguration angezeigt, die zumindest einem Istzustand der Anzeigevorrichtung entspricht.

Durch den Bedienrechner, insbesondere durch den Stellwerksrechner, kann der Zustand des Schienensystems verändert werden. Damit werden nachfolgend die Zustandssignale verändert, die an den Bildspeicher weitergeleitet und verarbeitet werden. Auf der Anzeigevorrichtung wird dann zumindest eine weitere Anzeigekonfiguration angezeigt, die dem zumindest einen Istzustand der Anzeigevorrichtung entspricht.

Bei den Signalen, die der Bildspeicher ausgibt und die durch den zumindest einen Sollzustand der Anzeigevorrichtung vorgegeben werden, kann es sich um Datenwerte handeln, insbesondere um Computerdaten oder um einen Computerdatensatz.

Gemäß zumindest einer Ausführungsform umfasst das Verfahren einen Schritt A), in dem eine erste Information erfasst wird, die repräsentativ für eine Bildaufnahme zumindest eines Istzustands der Anzeigevorrichtung ist. Der zumindest eine Istzustand repräsentiert den tatsächlichen Zustand der Anzeigevorrichtung. Die Anzeigevorrichtung sendet bevorzugt zumindest ein optisches Signal aus, das der angezeigten Anzeigekonfiguration entspricht. Das heißt, die erste Information ist repräsentativ für das zumindest eine optische Signal. Die Anzeigevorrichtung übermittelt einem Benutzer der Steuerkomponente beispielsweise Informationen und Aufträge über und/oder für einen Fahrweg eines Schienenfahrzeugs und des dazu korrespondierenden Schienensystems mittels des zumindest einen optischen Signals.

Gemäß zumindest einer Ausführungsform umfasst das Verfahren einen Schritt B), in dem eine zweite Information erfasst wird, die repräsentativ für Signale der Steuerkomponente ist. Bei der zweiten Information handelt es sich bevorzugt um Computerdaten oder um einen Computerdatensatz. Insbesondere handelt es sich bei den Signalen um sogenannte Hashwerte. In diesem Fall umfasst die zweite Information Hash-Werte. Ein Hash-Wert weist bevorzugt eine hexadezimale Zeichenkette auf, die aus Zahlen und/oder Buchstaben gebildet ist.

Gemäß zumindest einer Ausführungsform umfasst das Verfahren einen Schritt C), in dem die erste Information und die zweite Information für einen computerimplementierten Algorithmus bereitgestellt werden. Der Algorithmus ist hier bevorzugt zur Überwachung der Signalverbindung zwischen der Anzeigevorrichtung und der Steuerkomponente ausgebildet.

Gemäß zumindest einer Ausführungsform umfasst das Verfahren einen Schritt D), in dem eine erste Vergleichsinformation durch den Algorithmus in Abhängigkeit der ersten Information bestimmt wird. Insbesondere ordnet der Algorithmus einer ersten Information eine erste Vergleichsinformation eineindeutig zu.

Gemäß zumindest einer Ausführungsform umfasst das Verfahren einen Schritt E), in dem eine zweite Vergleichsinformation durch den Algorithmus in Abhängigkeit der zweiten Information bestimmt wird. Insbesondere ordnet der Algorithmus einer zweiten Information eine zweite Vergleichsinformation eineindeutig zu.

Bevorzugt sind die erste Vergleichsinformation und die zweite Vergleichsinformation direkt miteinander vergleichbar, insbesondere wenn die erste Information und die zweite Information nicht direkt miteinander vergleichbar sind.

Handelt es sich bei der ersten Information beispielsweise um eine Bildaufnahme der Anzeigevorrichtung und bei der zweiten Information um Hashwerte des Bildspeichers, werden diese nicht direkt vergleichbaren Informationen durch den Algorithmus jeweils einer ersten Vergleichsinformation und einer zweiten Vergleichsinformation zugeordnet, die direkt miteinander verglichen werden können.

Direkt miteinander vergleichbar heißt hier beispielsweise, dass es sich bei der ersten Vergleichsinformation und der zweiten Vergleichsinformation oder der zweiten Information jeweils um Computerdaten oder um einen Computerdatensatz einer gleichen Art handelt.

Gemäß zumindest einer Ausführungsform umfasst das Verfahren einen Schritt F), im dem die erste Vergleichsinformation mit der zweiten Vergleichsinformation verglichen wird. Beispielsweise umfasst der Vergleich eine Vergleichsvorschrift, die ermittelt, ob die erste Vergleichsinformation und die zweite Vergleichsinformation gleich sind.

Gemäß zumindest einer Ausführungsform umfasst das Verfahren einen Schritt G), in dem ein Fehlersignals zur Signalisierung eines Fehlers der Signalverbindung erzeugt wird, falls die erste Vergleichsinformation von der zweiten Vergleichsinformation abweicht.

Bei dem Fehlersignal handelt es sich bevorzugt um ein in einem Computer erzeugtes Computersignal. Bei dem Computersignal handelt es sich beispielsweise um eine Handlungsaufforderung an einen Benutzer und/oder an ein Stellwerksystem.

In mindestens einer Ausführungsform des Verfahrens zur Überwachung einer Signalverbindung zwischen einer Anzeigevorrichtung und einer Steuerkomponente wird die Anzeigevorrichtung durch die Steuerkomponente über die Signalverbindung angesteuert. Zudem wird zumindest ein Sollzustand der Anzeigevorrichtung durch Signale der Steuerkomponente vorgegeben. Das Verfahren umfasst folgende Schritte:
A) Erfassen einer ersten Information (I1), die repräsentativ für eine Bildaufnahme (BA) zumindest eines Istzustands der Anzeigevorrichtung (2) ist,
B) Erfassen einer zweiten Information (I2), die repräsentativ für Signale der Steuerkomponente (3) ist,
C) Bereitstellen der ersten Information (I1) und der zweiten Information (I2) für einen computerimplementierten Algorithmus (A),
D) Bestimmen einer ersten Vergleichsinformation (V1) durch den Algorithmus (A) in Abhängigkeit der ersten Information (I1),
E) Bestimmen einer zweiten Vergleichsinformation (V2) durch den Algorithmus (A) in Abhängigkeit der zweiten Information (I2),
F) Vergleich (V) der ersten Vergleichsinformation (V1) mit der zweiten Vergleichsinformation (V2), und, falls die erste Vergleichsinformation (V1) von der zweiten Vergleichsinformation (V2) abweicht,
G) Erzeugen eines Fehlersignals (FS) zur Signalisierung eines Fehlers der Signalverbindung (1).

Das Verfahren ist insbesondere auf einem Computer ausführbar. Weiterhin wird das Verfahren bevorzugt in der angegebenen Reihenfolge durchgeführt. Alternativ wird der Schritt B) vor dem Schritt A) ausgeführt.

In der Regel bildet die Signalverbindung zwischen der Anzeigevorrichtung und der Steuerkomponente einen einzigen Kanal. Etwaige Überwachungseinrichtungen sind weiterhin in der Regel lediglich in der Steuerkomponente integriert. Das heißt, etwaig auftretende Fehler innerhalb der Signalverbindung oder der Anzeigevorrichtung können damit nicht identifiziert werden.

Für den Fall, dass beispielsweise eine teilweise fehlerhafte Signalverbindung vorliegt und nur einige Pixel der Anzeigevorrichtung angesteuert werden, kann dies mit der integrierten Überwachungseinrichtung nicht überprüft und identifiziert werden. Weiterhin kann mit derartigen integrierten Überwachungseinrichtungen nicht überprüft werden, ob beispielsweise ein Pixelfehler in der Anzeigevorrichtung vorliegt oder nicht. In einem derartigen Fall würde auch ein Austausch von Überprüfungsinformationen zwischen der Anzeigevorrichtung und der Steuerkomponente nicht zu einer Identifikation des Fehlers führen, da die Anzeigevorrichtung fehlerfrei angesteuert wird, jedoch nicht die gewünschte Anzeigekonfiguration aussendet.

Eine Idee der vorliegenden Anmeldung ist es, unter anderem, durch das angegebene Verfahren einen weiteren Kanal zur Überwachung der Signalverbindung zwischen der Anzeigevorrichtung und der Steuerkomponente zu erzeugen. Vorteilhafterweise ist so eine unabhängige, parallele Überwachung der Anzeigevorrichtung in Abhängigkeit der Steuerkomponente ermöglicht. Vorteilhafterweise ist mit einem derartigen Verfahren eine Sicherheitsanforderungsstufe (englisch *"safety integrity level*", kurz "SIL") von größer 2 erreichbar.

Gemäß zumindest einer Ausführungsform des Verfahrens gibt die Steuerkomponente zumindest eine Konfiguration eines Schienensystems vor, die auf der Anzeigevorrichtung angezeigt wird. Insbesondere umfasst das Schienensystem Stellelemente. Diese Stellelemente können verschieden kombinierbar sein. Eine Gesamtheit der Stellelemente bildet beispielsweise den Zustand des Schienensystems. Die auf der Anzeigevorrichtung angezeigte Anzeigekonfiguration des Schienensystems, insbesondere einer Stellwerksaußenanlage, bildet den zumindest einen Istzustand der Anzeigevorrichtung. Die Bildaufnahme der Anzeigevorrichtung wird beispielsweise durch eine Bilderfassungseinheit erzeugt.

Die Bilderfassungseinheit umfasst beispielsweise eine Videokamera. Die Videokamera ist dabei derart ausgebildet, dass sie die Anzeigevorrichtung bevorzugt vollständig erfasst. Alternativ umfasst die Bilderfassungseinheit mehrere Videokameras, die jeweils einen Teil der Anzeigevorrichtung aufnehmen. Durch die Videokameras kann die Anzeigevorrichtung bevorzugt vollständig aufgenommen und abgebildet werden.

Weiterhin ist die Bilderfassungseinheit bevorzugt dazu ausgebildet, die von der Anzeigevorrichtung ausgesendeten optischen Signale in die erste Information zu transformieren, insbesondere in Computerdaten oder in einen Computerdatensatz.

Gemäß zumindest einer Ausführungsform des Verfahrens umfasst der Algorithmus im Schritt D) eine erste Überwachungskomponente. Bevorzugt ist die erste Überwachungseinheit dazu ausgebildet die erste Vergleichsinformation zu bestimmen, insbesondere eineindeutig zu bestimmen. Insbesondere ist die erste Überwachungskomponente dazu ausgebildet der ersten Information eineindeutig den zumindest einen Istzustand der Anzeigevorrichtung zuzuordnen.

Gemäß zumindest einer Ausführungsform des Verfahrens wird die erste Überwachungskomponente des Algorithmus trainiert. In diesem Fall handelt es sich bei der ersten Überwachungskomponente um eine lernende erste Überwachungskomponente. Beispielsweise wird die erste Überwachungskomponente derart trainiert, dass zu der ermittelten ersten Information eine korrespondierende erste Vergleichsinformation von einem Benutzer eineindeutig vorgegeben wird, wodurch die erste Überwachungskomponente den Zusammenhang zwischen der entsprechenden ersten Information und der korrespondierenden ersten Vergleichsinformation maschinell/algorithmisch lernt.

Gemäß zumindest einer Ausführungsform umfasst der Algorithmus im Schritt E) eine zweite Überwachungskomponente. Bevorzugt ist die zweite Überwachungskomponente dazu ausgebildet die zweite Vergleichsinformation zu bestimmen, insbesondere eineindeutig zu bestimmen. Insbesondere ist die zweite Überwachungskomponente dazu ausgebildet der zweiten Information eineindeutig den zumindest einen Sollzustand der Anzeigevorrichtung zuzuordnen.

Gemäß zumindest einer Ausführungsform des Verfahrens wird die zweite Überwachungskomponente des Algorithmus trainiert. In diesem Fall handelt es sich bei der zweiten Überwachungskomponente um eine lernende zweite Überwachungskomponente. Beispielsweise wird die zweite Überwachungskomponente derart trainiert, dass der ermittelten zweiten Information eine korrespondierende zweite Vergleichsinformation von einem Benutzer eineindeutig vorgegeben wird, wodurch die zweite Überwachungskomponente den Zusammenhang zwischen der entsprechenden zweiten Information und der korrespondierenden zweiten Vergleichsinformation maschinell/algorithmisch lernt.

Gemäß zumindest einer Ausführungsform des Verfahrens umfasst die erste Überwachungskomponente ein erstes künstliches neuronales Netzwerk. Das erste künstliche neuronale Netzwerk weist beispielswese zumindest eine verdeckte Schicht (englisch "hidden layer") umfasst. Insbesondere weist das erste künstliche neuronale Netzwerk eine einzige verdeckte Schicht auf.

Gemäß zumindest einer Ausführungsform umfasst die zweite Überwachungskomponente ein zweites künstliches neuronales Netzwerk. Das zweite künstliche neuronale Netzwerk weist beispielswese zumindest eine verdeckte Schicht auf. Insbesondere weist das erste zweite Netzwerk eine einzige verdeckte Schicht auf. Durch die Verwendung von jeweils einer einzigen verdeckten Schicht ist das erste künstliche neuronale Netzwerk und das zweite künstliche neuronale Netzwerk vorteilhafterweise besonders einfach implementierbar.

Durch die Verwendung einer ersten Überwachungskomponente und einer zweiten Überwachungskomponente, die bevorzugt getrennt voneinander trainierbar und/oder ausführbar sind, können diese Überwachungskomponente vorteilhafterweise dezentral eingesetzt werden. In diesem Fall sind die erste Überwachungskomponente und die zweite Überwachungskomponente vorteilhafterweise voneinander entkoppelt. Durch eine derartige Entkopplung kann die erste Vergleichsinformation und/oder die zweite Vergleichsinformation besonders einfach erzeugt werden. Vorteilhafterweise kann durch die Entkopplung die erste Überwachungskomponente an die erste Information angepasst werden, während die zweite Überwachungskomponente an die zweite Information angepasst wird. Damit kann so besonders einfach eine entsprechende Vergleichsinformation gebildet werden.

Weiterhin werden beispielsweise verschiedene Genauigkeitsanforderungen an die erste Überwachungskomponente und die zweite Überwachungskomponente gestellt. Durch die getrennte Trainierbarkeit und/oder Ausführbarkeit können die erste Überwachungskomponente und die zweite Überwachungskomponente damit vorteilhafterweise genau an die geforderten Anforderungen angepasst werden.

Weiterhin das Verfahren durch die Verwendung von künstlichen neuronalen Netzwerken besonders leicht an verschiedene Anforderungen anpassbar. Vorteilhafterweise ist so eine besonders hohe Flexibilität gegeben.

Alternativ ist es möglich, dass die erste Überwachungskomponente und die zweite Überwachungskomponente ein gemeinsames künstliches neuronales Netzwerk umfassen. In diesem Fall weist das gemeinsame künstliche neuronale Netzwerk zumindest eine verdeckte Schicht auf.

Gemäß zumindest einer Ausführungsform wird das künstliche neuronale Netzwerk durch einen Back-Propagation-Algorithmus optimiert.

Gemäß zumindest einer Ausführungsform des Verfahrens werden zumindest zwei Bildaufnahmen in einem definierten Zeitintervall bereitgestellt.

Gemäß zumindest einer Ausführungsform des Verfahrens ist das definierte Zeitintervall derart ausgebildet, um eine alternierende Signalfolge zu identifizieren. Beispielsweise ist das Zeitintervall höchstens 1 Sekunde, insbesondere höchstens 0,1 Sekunden. Ist beispielsweise ein optisches Signal ein blinkendes optisches Signal, kann dieses so vorteilhafterweise identifiziert werden.

Gemäß zumindest einer Ausführungsform umfasst das Verfahren einen Schritt A1), in dem eine dritte Information erfasst wird, die repräsentativ für eine Bildaufnahme eines Benutzers eines Bedienrechners ist, durch den beispielsweise der Stellwerksrechner gesteuert wird. Der Benutzer kann durch den Bedienrechner den Zustand des Schienensystems aktiv verändern. Beispielswese werden weitere Zustandssignale über den Bedienrechner an den Stellwerksrechner über eine weitere Signalverbindung übermittelt. Damit werden nachfolgend die Zustandssignale verändert, die an den Bildspeicher weitergeleitet und verarbeitet werden. Beispielsweise wird so durch eine vom Benutzer ausgelöste Aktion zumindest ein Sollzustand der Anzeigevorrichtung vorgegeben. Die Aktion umfasst bevorzugt eine Betätigung eines Bedienelements, wie beispielsweise einer Taste und/oder eines Schalters. Damit ist die dritte Information in diesem Fall repräsentativ für zumindest einen Sollzustand der Anzeigevorrichtung.

In dieser Ausführungsform wird der Benutzer von der Bilderfassungseinheit ebenfalls aufgenommen, wodurch die Bildaufnahme des Benutzers erzeugt wird. Beispielsweise handelt es sich bei der Bilderfassungseinheit um dieselbe Bilderfassungseinheit, die zur Bildaufnahme der Anzeigevorrichtung verwendet wird. Alternativ handelt es sich um eine weitere Bilderfassungseinheit.

Weiterhin wird in einem Schritt D1) bevorzugt eine dritte Vergleichsinformation durch den Algorithmus in Abhängigkeit der dritten Information bestimmt. Insbesondere ordnet der Algorithmus der dritten Information die dritte Vergleichsinformation eineindeutig zu.

Bevorzugt umfasst der Algorithmus eine dritte Überwachungskomponente, die insbesondere ein drittes künstliches neuronales Netzwerk aufweist, das trainierbar ausgebildet ist.

Nachfolgend werden die erste Vergleichsinformation, die zweite Vergleichsinformation und die dritte Vergleichsinformation miteinander verglichen. Falls die Vergleichsinformationen voneinander abweichen wird ebenfalls ein Fehlersignals zur Signalisierung eines Fehlers der Signalverbindung erzeugt. Weicht die dritte Vergleichsinformation von der ersten Vergleichsinformation und/oder der zweiten Vergleichsinformation ab, wird ein Fehlersignal zur Signalisierung eines Fehlers der weiteren Signalverbindung zwischen dem Bedienrechner und dem Stellwerksrechner erzeugt.

Des Weiteren wird ein Computerprogramm erläutert. Das Computerprogramm umfasst Befehle, die bei der Ausführung des Computerprogramms durch einen Computer diesen veranlassen, das hier beschriebene Verfahren auszuführen.

Beispielsweise umfasst ein Computer lesbares Speichermedium das Computerprogramm, das bei der Ausführung durch einen Computer diesen veranlasst, das hier beschriebene Verfahren auszuführen.

Des Weiteren wird eine Anordnung erläutert.

Gemäß zumindest einer Ausführungsform umfasst die Anordnung eine Anzeigevorrichtung und einer Steuerkomponente, die über eine Signalverbindung miteinander verbunden sind.

Gemäß zumindest einer Ausführungsform ist die Steuerkomponente dazu ausgebildet die Anzeigevorrichtung über die Signalverbindung anzusteuern.

Gemäß zumindest einer Ausführungsform ist zumindest ein Sollzustand der Anzeigevorrichtung durch Signale der Steuerkomponente vorgebbar.

Gemäß zumindest einer Ausführungsform umfasst die Anordnung eine Überwachungseinheit zur Überwachung der Signalverbindung. Beispielsweise umfasst die Überwachungseinheit eine erste Überwachungskomponente und/oder eine zweite Überwachungskomponente. Bevorzugt ist die die erste Überwachungskomponente trainierbar ausgebildet. Weiterhin bevorzugt ist die zweite Überwachungskomponente ebenfalls trainierbar ausgebildet.

Gemäß zumindest einer Ausführungsform ist die Überwachungseinheit so eingerichtet, dass diese ein hier beschriebenes Verfahren ausführt.

Gemäß zumindest einer Ausführungsform ist die Steuerkomponente dazu ausgebildet zumindest eine Anzeigekonfiguration eines Schienensystems vorzugeben, die auf der Anzeigevorrichtung anzeigbar ist.

Die oben genannten Eigenschaften, Merkmale und Vorteile der Erfindung und die Art und Weise, wie diese erreicht werden, werden durch die folgende Beschreibung der Ausführungsbeispiele der Erfindung in Verbindung mit den entsprechenden Figuren weitergehend erläutert. Gleiche, gleichartige oder gleich wirkende Elemente sind in den Figuren mit den gleichen Bezugszeichen versehen. Die Figuren und die Größenverhältnisse der in den Figuren dargestellten Elemente untereinander sind nicht als maßstäblich zu betrachten. Vielmehr können einzelne Elemente zur besseren Darstellbarkeit und/oder für eine bessere Verständlichkeit übertrieben groß dargestellt sein.

Es zeigen:
Figur 1 eine schematische Darstellung einer hier beschriebenen Anordnung gemäß einem Ausführungsbeispiel, und
Figuren 2 und 3 Ablaufdiagramme zu Ausführungsbeispielen des Verfahrens.

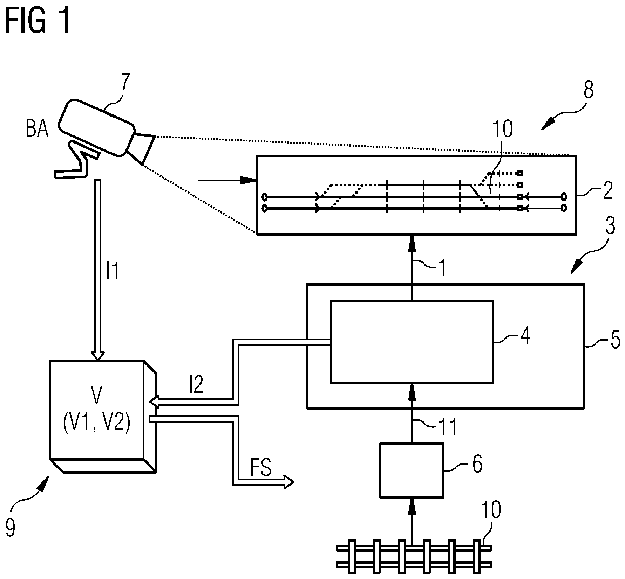

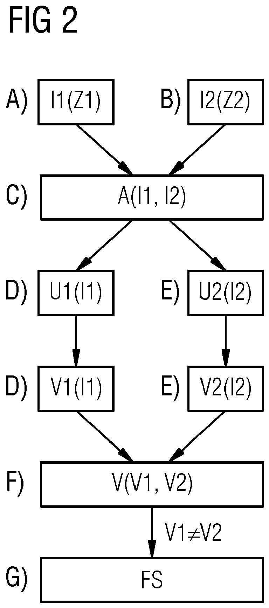

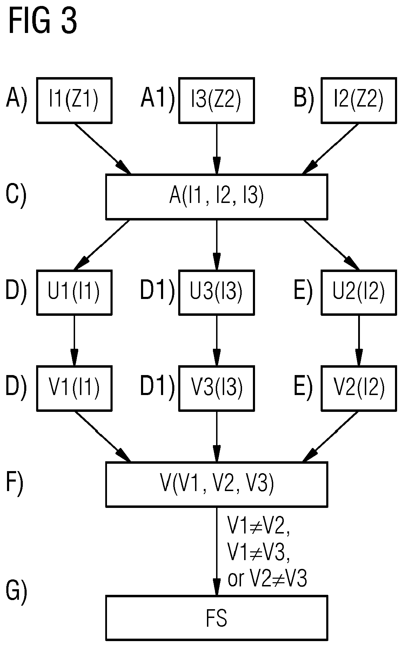

Die Anordnung 8 gemäß dem Ausführungsbeispiel der Figur 1 umfasst eine Anzeigevorrichtung 2 und eine Steuerkomponente 3, die durch eine Signalverbindung 1 miteinander verbunden sind. In diesem Ausführungsbeispiel ist die Anzeigevorrichtung 2 durch die Steuerkomponente 3 über die Signalverbindung 1 ansteuerbar. Zumindest ein Sollzustand Z2 der Anzeigevorrichtung 2, wie beispielsweise in Verbindung mit den Ausführungsbeispielen der Figuren 2 und 3 gezeigt, sind durch Signale der Steuerkomponente 3 vorgebbar.

Die Steuerkomponente 3 umfasst in diesem Ausführungsbeispiel einen Bildspeicher 4, einen Bedienrechner 5 und einen Stellwerksrechner 6. Der Stellwerksrechner 6 erfasst Zustandssignale eines Schienensystems 10 und gibt diese Zustandssignale an den Bildspeicher 4 mittels einer weiteren Signalverbindung 11 weiter. Diese Zustandssignale sind von dem Bildspeicher 4 verarbeitbar. Weiterhin sind die Zustandssignale mittels der Signalverbindung 1 durch Signale an die Anzeigevorrichtung 2 weiterleitbar. Auf der Anzeigevorrichtung 2 wird dann zumindest eine Anzeigekonfiguration angezeigt, die zumindest einem Istzustand Z1 der Anzeigevorrichtung 2, wie beispielsweise in Verbindung mit den Ausführungsbeispielen der Figuren 2 und 3 gezeigt, entspricht.

Die Anordnung 8 umfasst weiterhin eine Überwachungseinheit 9 zur Überwachung der Signalverbindung 1. In diesem Ausführungsbeispiel umfasst die Überwachungseinheit 9 eine erste Überwachungskomponente U1 und eine zweite Überwachungskomponente U2, wie beispielsweise in Verbindung mit den Ausführungsbeispielen der Figuren 2 und 3 gezeigt. Die erste Überwachungskomponente U1 und die zweite Überwachungskomponente U2 umfassen jeweils ein künstliches neuronales Netzwerk. Weiterhin sind die erste Überwachungskomponente U1 und die zweite Überwachungskomponente U2 trainierbar ausgebildet.

Eine Bildaufnahme BA der Anzeigevorrichtung 2 ist durch eine Bilderfassungseinheit 7 erzeugbar. Bei der Bilderfassungseinheit handelt es sich hier um eine Videokamera. Damit ist eine erste Information I1 von der Überwachungseinheit 9 erfassbar, die repräsentativ für eine Bildaufnahme BA zumindest eines Istzustands Z1 der Anzeigevorrichtung 2 ist. Weiterhin ist mit der ersten Überwachungskomponente U1 eine erste Vergleichsinformation V1 in Abhängigkeit der ersten Information I1 erzeugbar.

Weiterhin ist eine zweite Information I2 von der Überwachungseinheit 9 erfassbar, die repräsentativ für Signale der Steuerkomponente 3 ist. In diesem Fall handelt es sich bei den Signalen um sogenannte Hashwerte des Bildspeichers 4. Mit der zweiten Überwachungskomponente U2 eine zweite Vergleichsinformation V2 in Abhängigkeit der zweiten Information I2 erzeugbar.

Bei der Überwachung der Signalverbindung 1, wird die erste Vergleichsinformation V1 mit der zweiten Vergleichsinformation V2 verglichen. Falls die erste Vergleichsinformation V1 mit der zweiten Vergleichsinformation V2 nicht übereinstimmt, ist ein Fehlersignal FS zur Signalisierung eines Fehlers der Signalverbindung 1 erzeugbar.

In dem Ablaufdiagramm gemäß dem Ausführungsbeispiel der Figur 2 wird zunächst in einem Schritt A) einer erste Information I1, die repräsentativ für eine Bildaufnahme BA zumindest eines Istzustands Z1 der Anzeigevorrichtung 2 ist, erfasst.

Nachfolgend wird in einem Schritt B) eine zweite Information I2, die repräsentativ für Signale der Steuerkomponente 3 ist, erfasst.

In einem weiteren Schritt C) werden die erste Information I1 und die zweite Information I2 für einen computerimplementierten Algorithmus A bereitgestellt.

In einem nächsten Schritt D) wird eine erste Vergleichsinformation V1 durch den Algorithmus A in Abhängigkeit der ersten Information I1 bestimmt. In diesem Ausführungsbeispiel umfasst der Algorithmus A eine erste Überwachungskomponente U1, die dazu ausgebildet ist der ersten Information I1 eineindeutig eine erste Vergleichsinformation V1 zuzuordnen. Damit eine derartige Zuordnung erreichbar ist, wird die erste Überwachungskomponente U1 trainiert. Weiterhin handelt es sich bei der ersten Überwachungskomponente U1 um ein künstliches neuronales Netzwerk.

Weiterhin wird im Schritt E) eine zweite Vergleichsinformation V2 durch den Algorithmus A in Abhängigkeit der zweiten Information I2 bestimmt. In diesem Ausführungsbeispiel umfasst der Algorithmus A eine zweite Überwachungskomponente U2, die dazu ausgebildet ist der zweiten Information I2 eineindeutig eine zweite Vergleichsinformation V2 zuzuordnen. Damit eine derartige Zuordnung erreichbar ist, wird die zweite Überwachungskomponente U2 trainiert. Weiterhin handelt es sich bei der zweiten Überwachungskomponente U2 um ein künstliches neuronales Netzwerk.

In einem Schritt F) wird die erste Vergleichsinformation V1 mit der zweiten Vergleichsinformation V2 durch einen Vergleich V verglichen, und, falls die erste Vergleichsinformation V1 von der zweiten Vergleichsinformation V2 abweicht, wird im Schritt G) eine Fehlersignal FS zur Signalisierung eines Fehlers der Signalverbindung 1 erzeugt.

In dem Ablaufdiagramm gemäß dem Ausführungsbeispiel der Figur 3 wird zusätzlich zu den Schritten der Figur 2 ein Schritt A1) durchgeführt. Hier wird eine dritte Information I3 erfasst, die repräsentativ für eine Bildaufnahme BA eines Benutzers eines elektronischen Systems, insbesondere des Bedienrechners 5, ist, durch den der Stellwerksrechner 6 gesteuert wird. Die dritte Information I3 ist in diesem Fall repräsentativ für zumindest einen Sollzustand Z2 der Anzeigevorrichtung.

Weiterhin umfasst der Algorithmus A in diesem Ausführungsbeispiel eine dritte Überwachungskomponente U3. Durch die dritte Überwachungskomponente U3 wird in Abhängigkeit der dritten Information I3 die dritte Vergleichsinformation V3 bestimmt.

Nachfolgend werden die erste Vergleichsinformation V1, die zweite Vergleichsinformation V2 und die dritte Vergleichsinformation V3 durch einen Vergleich V verglichen.

Obwohl die Erfindung anhand von Ausführungsbeispielen detailliert dargestellt und beschrieben wurde, ist die Erfindung nicht auf die offenbarten Ausführungsbeispiele und die darin erläuterten konkreten Merkmalskombinationen beschränkt. Weitere Variationen der Erfindung können von einem Fachmann erhalten werden, ohne den Schutzumfang der beanspruchten Erfindung zu verlassen.

### Bezugszeichenliste

- 1: Signalverbindung
- 2: Anzeigevorrichtung
- 3: Steuerkomponente
- 4: Bildspeicher
- 5: Bedienrechner
- 6: Stellwerksrechner
- 7: Bilderfassungseinheit
- 8: Anordnung
- 9: Überwachungseinheit
- 10: Schienensystem
- 11: weitere Signalverbindung

- FS: Fehlersignal
- I1: erste Information
- I2: zweite Information
- I3: dritte Information
- V1: erste Vergleichsinformation
- V2: zweite Vergleichsinformation
- V3: dritte Vergleichsinformation
- V: Vergleich
- U1: erste Überwachungskomponente
- U2: zweite Überwachungskomponente
- U3: dritte Überwachungskomponente
- Z1: Istzustand
- Z2: Sollzustand

## Patentansprüche

1. Verfahren zur Überwachung einer Signalverbindung (1) zwischen einer Anzeigevorrichtung (2) und einer Steuerkomponente (3), wobei
- die Anzeigevorrichtung (2) durch die Steuerkomponente (3) über die Signalverbindung ansteuert wird, und
- Sollzustände (Z2) der Anzeigevorrichtung (2) durch Signale der Steuerkomponente (3) vorgegeben werden,
mit den Schritten:
A) Erfassen einer ersten Information (I1), die repräsentativ für eine Bildaufnahme (BA) zumindest eines Istzustands (Z2) der Anzeigevorrichtung (2) ist,
B) Erfassen einer zweiten Information (I2), die repräsentativ für Signale der Steuerkomponente (3) ist,
C) Bereitstellen der ersten Information (I1) und der zweiten Information (I2) für einen computerimplementierten Algorithmus (A),
D) Bestimmen einer ersten Vergleichsinformation (V1) durch den Algorithmus (A) in Abhängigkeit der ersten Information (I1),
E) Bestimmen einer zweiten Vergleichsinformation (V2) durch den Algorithmus (A) in Abhängigkeit der zweiten Information (I2),
F) Vergleich (V) der ersten Vergleichsinformation (V1) mit der zweiten Vergleichsinformation (V2), und, falls die erste Vergleichsinformation (V1) von der zweiten Vergleichsinformation (V2) abweicht,
G) Erzeugen eines Fehlersignals (FS) zur Signalisierung eines Fehlers der Signalverbindung (1).

2. Verfahren nach dem Anspruch 1, wobei die Steuerkomponente (3) zumindest eine Konfiguration eines Schienensystems (10) vorgibt, die auf der Anzeigevorrichtung (2) angezeigt wird.

3. Verfahren nach einem der vorhergehenden Ansprüche, wobei
- der Algorithmus (A) im Schritt D) eine erste Überwachungskomponente (U1) umfasst, und
- die erste Überwachungskomponente (U1) des Algorithmus (A) trainiert wird, und/oder
- der Algorithmus (A) im Schritt E) eine zweite Überwachungskomponente (U2) umfasst, und
- die zweite Überwachungskomponente (U2) des Algorithmus (A) trainiert wird.

4. Verfahren nach dem Anspruch 3, wobei
- die erste Überwachungskomponente (U1) ein erstes künstliches neuronales Netzwerk umfasst und/oder
- die zweite Überwachungskomponente (U2) ein zweites künstliches neuronales Netzwerk umfasst.

5. Verfahren nach einem der Ansprüche 3 oder 4, wobei das künstliche neuronale Netzwerk durch einen Back-Propagation-Algorithmus optimiert wird.

6. Verfahren nach einem der vorhergehenden Ansprüche, wobei
- zumindest zwei Bildaufnahmen in einem definierten Zeitintervall bereitgestellt werden, und
- das definierte Zeitintervall derart ausgebildet ist, um eine alternierende Signalfolge zu identifizieren.

7. Verfahren nach einem der vorhergehenden Ansprüche, das Verfahren einen weiteren Schritt A1) umfasst, in dem eine dritte Information (I3) erfasst wird, die repräsentativ für eine Bildaufnahme (BA) eines Benutzers eines Bedienrechners (5) ist, durch den ein Stellwerksrechner (6) gesteuert wird.

8. Computerprogramm, umfassend Befehle, die bei der Ausführung des Computerprogramms durch einen Computer diesen veranlassen, ein Verfahren nach einem der Ansprüche 1 bis 7 auszuführen.

9. Anordnung (8) mit
- einer Anzeigevorrichtung (2) und einer Steuerkomponente (3), die über eine Signalverbindung (1) miteinander verbunden sind, wobei
- die Steuerkomponente (3) dazu ausgebildet ist die Anzeigevorrichtung (2) über die Signalverbindung (1) anzusteuern, und
- Sollzustände (Z2) der Anzeigevorrichtung (2) durch Signale der Steuerkomponente (3) vorgebbar sind,
- eine Überwachungseinheit (9) zur Überwachung der Signalverbindung (1), wobei
- die Überwachungseinheit (9) so eingerichtet ist, dass diese ein Verfahren nach einem der Ansprüche 1 bis 7 ausführt.

10. Anordnung (8) nach Anspruch 9,
- wobei die Steuerkomponente (3) dazu ausgebildet ist zumindest eine Anzeigekonfiguration eines Schienensystems (10) vorzugeben, die auf der Anzeigevorrichtung (2) anzeigbar ist.
